# EUROPEAN PATENT APPLICATION

(11) **EP 4 647 689 A1**
(43) Date of publication of application: **12.11.2025**
(21) Application number: 24779219.5
(22) Date of filing: 06.03.2024
(51) Int. Cl.: F25D 11/00, F25D 17/08

(54) **TEMPERATURE CONTROL SYSTEM**

(30) Priority: 31.03.2023 JP 2023058251
(71) Applicant: Daikin Industries, Ltd., Osaka-shi, Osaka 530-0001 (JP)
(72) Inventor: MORISHIMA Akichika, Osaka-shi, Osaka 530-0001 (JP); SOMEKAWA Kazuma, Osaka-shi, Osaka 530-0001 (JP); HIBINO Hiroshi, Osaka-shi, Osaka 530-0001 (JP)
(74) Representative: Hoffmann Eitle
(86) International application number: PCT/JP2024/008563
(87) International publication number: WO 2024/203084

(57) **Abstract**

A temperature control system includes a mechanism configured to circulate air between a freezing refrigeration chamber (3a) in a moving body (1) and a battery mounting space (50a) in which a battery (B) is mounted. The mechanism includes a circulation passage (60) configured to send air in the freezing refrigeration chamber (3a) to the freezing refrigeration chamber (3a) after the battery mounting space (50a).

## Description

### TECHNICAL FIELD

The present disclosure relates to a temperature control system.

### BACKGROUND ART

Patent Document 1 discloses an in-vehicle storage battery unit. The in-vehicle storage battery unit is mounted on a freezer refrigerator car. The freezer refrigerator car includes a freezing refrigeration chamber, a dry chamber, and a refrigeration apparatus. The in-vehicle storage battery unit includes a storage battery (battery) and a housing cover. A storage battery is disposed in the housing cover. The housing cover has a first door. A second door is provided on a wall separating the freezing refrigeration chamber and the dry chamber. When the first door and the second door are opened, the cold air in the freezing refrigeration chamber flows into the housing cover through a gap formed by opening the first door, and the heat in the housing cover is discharged to the outside of the housing cover through a gap formed by opening the second door. Accordingly, it is possible to reduce an increase in the temperature in the housing cover inside which the storage battery is housed.

### CITATION LIST

### PATENT DOCUMENT

Patent Document 1: Japanese Unexamined Patent Publication No. 2017-114385

### SUMMARY OF THE INVENTION

### TECHNICAL PROBLEM

The air in the freezing refrigeration chamber has an extremely low humidity (absolute humidity) due to an extremely low temperature, and thus is unlikely to cause freezing and condensation. However, when the cold air in the freezing refrigeration chamber flows into the housing cover, a negative pressure may be generated so that the outside air can flow into the freezing refrigeration chamber. In this case, the moisture-containing outside air folowing therein can cause condensation on the surface of the storage battery.

An object of the present invention is to reudce condensation on the surface of a battery.

### SOLUTION TO THE PROBLEM

A temperature control system of a first aspect includes a mechanism configured to circulate air between a freezing refrigeration chamber (3a) in a moving body (1) and a battery mounting space (50a) in which a battery (B) is mounted, wherein the mechanism includes a circulation passage (60) configured to send air in the freezing refrigeration chamber (3a) to the freezing refrigeration chamber (3a) after the battery mounting space (50a), and a temperature adjusting unit configured to adjust a temperature of air in the battery mounting space (50a) or a temperature of the battery (B) to a temperature higher than or equal to a predetermined temperature that is higher than a temperature of air in the freezing refrigeration chamber (3a).

According to the first aspect, it is possible to reduce condensation on the surface of the battery (B).

A second aspect is an embodiment of the first aspect. In the second aspect, the circulation passage (60) communicates with each of the freezing refrigeration chamber (3a) and the battery mounting space (50a) at least at two locations (61b, 62b, 61a, 62a).

According to the second aspect, it is possible to send the air in the freezing refrigeration chamber (3a) into the circulation passage (60) by using one communicating location among the plurality of communicating locations between the circulation passage (60) and the freezing refrigeration chamber (3a), and also it is possible to send the air in the circulation passage (60) into the freezing refrigeration chamber (3a) by using another communicating location among them.

A third aspect is an embodiment of the first or second aspect. In the third aspect, the circulation passage (60) includes a first passage (61) and a second passage (62) communicating with the freezing refrigeration chamber (3a) and the battery mounting space (50a), and the freezing refrigeration chamber (3a), the first passage (61), the battery mounting space (50a), and the second passage (62) are annularly connected in an order of the freezing refrigeration chamber (3a), the first passage (61), the battery mounting space (50a), the second passage (62), and the freezing refrigeration chamber (3a).

According to the third aspect, it is possible to send the air in the freezing refrigeration chamber (3a) to the battery mounting space (50a) through the first passage (61) and then return it to the freezing refrigeration chamber (3a) through the second passage (62).

A fourth aspect is an embodiment of any one of the first to third aspects. In the fourth aspect, the mechanism includes a first adjusting unit configured to adjust a volume of air flowing through the circulation passage (60).

According to the fourth aspect, it is possible to adjust the temperature of air in the battery mounting space (50a) to a temperature suitable for storing the battery (B) by adjusting a volume of cold air sent from the freezing refrigeration chamber (3a) to the battery mounting space (50a).

A fifth aspect is an embodiment of the fourth aspect. In the fifth aspect, the first adjusting unit includes a blower unit (70) or a damper (76, 77, 78, 80, 81, 82, 83).

According to the fifth aspect, the volume of cold air sent from the freezing refrigeration chamber (3a) to the battery mounting space (50a) can be adjusted by the blower unit (70) or the damper (76, 77, 78, 80, 81, 82, 83).

A sixth aspect is an embodiment of any one of the first to fifth aspects. In the sixth aspect, the circulation passage (60) is provided with a heating unit (74) disposed upstream of the battery mounting space (50a) and configured to heat air.

According to the sixth aspect, it is possible to prevent the temperature of air from the freezing refrigeration chamber (3a) that is sent to the battery mounting space (50a) from being too low. As a result, it is possible to adjust the temperature of air in the battery mounting space (50a) to a temperature suitable for storing the battery (B).

A seventh aspect is an embodiment of any one of the first to sixth aspects. In the seventh aspect, the mechanism includes a second adjusting unit configured to adjust a volume of air sent from the circulation passage (60) to the freezing refrigeration chamber (3a).

According to the seventh aspect, when the temperature of air in the circulation passage (60) becomes too high, the second adjusting unit reduces the volume of air sent from the circulation passage (60) to the freezing refrigeration chamber (3a), whereby it is possible to reduce a rapid increase in the temperature of the freezing refrigeration chamber (3a), and thus it is possible to reduce an increase in the heat load of the refrigeration apparatus (10) for the freezing refrigeration chamber (3a).

An eighth aspect is an embodiment of the seventh aspect. In the eighth aspect, the second adjusting unit includes a blower unit (70) or a damper (77, 81).

According to the eighth aspect, the volume of air sent to the freezing refrigeration chamber (3a) can be adjusted by the blower unit (70) or the damper (77, 81).

A ninth aspect is an embodiment of any one of the first to eighth aspects. In the ninth aspect, the temperature control system further includes a stirring unit (73) provided in the freezing refrigeration chamber (3a) and configured to stir air in the freezing refrigeration chamber (3a), wherein the stirring unit (73) is disposed to stir air sent from the battery mounting space (50a) to the freezing refrigeration chamber (3a) in the freezing refrigeration chamber (3a).

According to the ninth aspect, the air in the freezing refrigeration chamber (3a) is stirred by the stirring unit (73), whereby it is possible to reduce unevenness of the temperature of air in the freezing refrigeration chamber (3a).

A tenth aspect is an embodiment of any one of the first to ninth aspects. In the tenth aspect, the temperature control system further includes a refrigeration apparatus (10) capable of performing a refrigeration operation by circulating a refrigerant, wherein the refrigeration apparatus (10) includes a heat exchanger (21) configured to exchange heat between the refrigerant and the air in the freezing refrigeration chamber (3a), and the heat exchanger (21) is disposed in part of the freezing refrigeration chamber (3a) that is close to a communicating location (62b, 64b) between the freezing refrigeration chamber (3a) and the circulation passage (60).

According to the tenth aspect, the air sent to the freezing refrigeration chamber (3a) can be quickly cooled by the heat exchanger (21). As a result, it is possible to reduce unevenness of the temperature of air in the freezing refrigeration chamber (3a).

An eleventh aspect is an embodiment of the third aspect. In the eleventh aspect, the circulation passage (60) includes a third passage (63) communicating with the first passage (61) and the second passage (62).

According to the eleventh aspect, the air warmed by heat generation of the battery (B) is sent to the first passage (61) through the third passage (63), and the warmed air is mixed with the cold air sent from the freezing refrigeration chamber (3a) to the battery mounting space (50a) through the first passage (61), whereby it is possible to reduce the excessively-cooled air being supplied to the battery mounting space (50a). As a result, it is possible to prevent the battery (B) in the battery mounting space (50a) from being excessively cooled.

A twelfth aspect is an embodiment of any one of the first to tenth aspects. In the twelfth aspect, the circulation passage (60) includes a fourth passage (64) formed in an annular shape and communicating with the freezing refrigeration chamber (3a) at least at two locations (64a, 64b), and a fifth passage (65) and a sixth passage (66) communicating with the fourth passage (64) and the battery mounting space (50a), and the fourth passage (64), the fifth passage (65), the battery mounting space (50a), and the sixth passage (66) are annularly connected in an order of the fourth passage (64), the fifth passage (65), the battery mounting space (50a), the sixth passage (66), and the fourth passage (64).

According to the twelfth aspect, in the circulation passage (60), the temperature of air sent to the freezing refrigeration chamber (3a) and the temperature of air sent to the battery mounting space (50a) can be controlled by the fourth passage (64).

A thirteenth aspect is an embodiment of the twelfth aspect. In the thirteenth aspect, the mechanism includes a switching unit (80, 81, 82, 83) configured to switch between the fourth passage (64) being disconnected and not disconnected from each of the freezing refrigeration chamber (3a), the fifth passage (65), and the sixth passage (66), and a blower unit (70) provided in the fourth passage (64) and configured to blow air.

According to the thirteenth aspect, it is possible to control the timing of controlling the temperature of air in the fourth passage (64).

A fourteenth aspect is an embodiment of any one of the first to thirteenth aspects. In the fourteenth aspect, the battery mounting space (50a) is provided in the freezing refrigeration chamber (3a), a lower portion of the moving body (1), or an inside of the moving body (1).

According to the fourteenth aspect, the battery (B) can be mounted in the freezing refrigeration chamber (3a), the lower portion of the moving body (1), or the inside of the moving body (1).

A fifteenth aspect is an embodiment of any one of the first to fourteenth aspects. In the fifteenth aspect, the temperature control system further includes a refrigeration apparatus (10) configured to control a temperature in the freezing refrigeration chamber (3a); and a control unit (72) configured to control operation of the refrigeration apparatus (10) based on a volume or temperature of air sent from the circulation passage (60) to the freezing refrigeration chamber (3a).

According to the fifteenth aspect, it is possible to efficiently operate the refrigeration apparatus (10) based on the volume or temperature of air from the circulation passage (60).

### BRIEF DESCRIPTION OF THE DRAWINGS

[FIG. 1] FIG. 1 is a schematic view of a moving body.
[FIG. 2] FIG. 2 is a schematic configuration diagram of a refrigeration apparatus.
[FIG. 3] FIG. 3 is a schematic diagram of a first embodiment of a temperature control system.
[FIG. 4] FIG. 4 is a block diagram of the configuration of the temperature control system.
[FIG. 5] FIGS. 5A and 5B are schematic diagrams of a second embodiment of the temperature control system. FIG. 5C is a schematic diagram of a third embodiment of the temperature control system.
[FIG. 6] FIGS. 6A and 6B are schematic diagrams of a fourth embodiment of the temperature control system.
[FIG. 7] FIG. 7 is a flowchart of a second example of operation of the temperature control system.
[FIG. 8] FIGS. 8A and 8B are schematic diagrams of a fifth embodiment of the temperature control system.
[FIG. 9] FIG. 9 is a flowchart of a third example of the operation of the temperature control system.
[FIG. 10] FIGS. 10A to 10C are schematic diagrams of a sixth embodiment of the temperature control system.
[FIG. 11] FIG. 11 is a flowchart of a fourth example of the operation of the temperature control system.
[FIG. 12] FIG. 12 is a schematic diagram of a seventh embodiment of the temperature control system.
[FIG. 13] FIG. 13 is a flowchart of a fifth example of the operation of the temperature control system.
[FIG. 14] FIG. 14 is a flowchart of the fifth example of the operation of the temperature control system.
[FIG. 15] FIGS. 15A and 15B are diagrams of variations of the location of a battery mounting space.

### DESCRIPTION OF EMBODIMENTS

An embodiment of the present disclosure will be described in detail below with reference to the drawings. The present disclosure is not limited to the embodiments shown below, and various changes can be made within the scope without departing from the technical concept of the present disclosure. Since each of the drawings is intended to illustrate the present disclosure conceptually, dimensions, ratios, or numbers may be exaggerated or simplified as necessary for the sake of ease of understanding. The same reference characters denote the same or equivalent components in each embodiment, each variation, and the drawings, and the detailed description thereof, the description of advantages associated therewith, and other descriptions will not be repeated.

### <Moving Body>

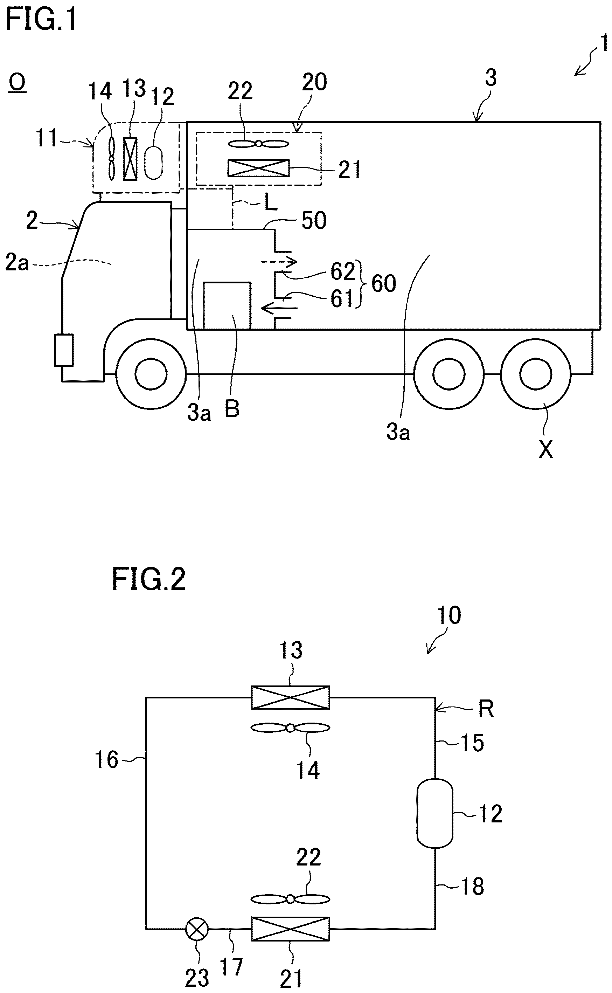

As illustrated in FIG. 1, a moving body (1) according to a first embodiment is a truck. The moving body (1) is a refrigeration vehicle having a cabin (2) and a cold storage (3) provided behind the cabin (2). A driver's compartment (2a) is formed in the cabin (2). A freezing refrigeration chamber (3a) is formed in the cold storage (3). The freezing refrigeration chamber (3a) stores cargo such as food items. The temperature in the freezing refrigeration chamber (3a) is set to a temperature suitable for freezing or refrigerating the stored items. The temperature in the freezing refrigeration chamber (3a) is, for example, below zero. The temperature in the freezing refrigeration chamber (3a) may be, for example, -30°C. The temperature in the freezing refrigeration chamber (3a) is low, and so the humidity (the absolute humidity) is low. The moving body (1) has a refrigeration apparatus (10) for cooling air in the cold storage (3).

### <General Configuration of Refrigeration Apparatus>

As illustrated in FIGS. 1 and 2, the refrigeration apparatus (10) has a refrigerant circuit (R) filled with a refrigerant. The refrigerant circuit (R) performs a vapor compression refrigeration cycle. The refrigeration apparatus (10) has a first unit (11) and a second unit (20). The first unit (11) is disposed above the cabin (2). The first unit (11) forms a heat source unit located in an outdoor space (O). The second unit (20) is disposed in the freezing refrigeration chamber (3a). The second unit (20) forms a cooling unit.

The first unit (11) has a compressor (12), an outdoor heat exchanger (13), an outdoor fan (14), and an outdoor motor that rotates the outdoor fan (14). The second unit (20) has an internal heat exchanger (21), an internal fan (22), and an internal motor that rotates the internal fan (22).

### <Configuration of Refrigerant Circuit>

As illustrated in FIG. 2, the refrigerant circuit (R) has the compressor (12), the outdoor heat exchanger (13), the internal heat exchanger (21), and an expansion valve (23) as main components.

The compressor (12) sucks and compresses refrigerant, and discharges the compressed refrigerant. The compressor (12) is, for example, a scroll compressor, a rotary compressor, an oscillating piston compressor, or the like. The compressor (12) is connected in series to a gas end portion of the outdoor heat exchanger (13) via a discharge pipe (15).

The outdoor heat exchanger (13) is placed in the outdoor space (O) or in a flow path through which outdoor air flows. The outdoor heat exchanger (13) exchanges heat between the outdoor air and the refrigerant. The outdoor heat exchanger (13) is a fin-and-tube heat exchanger. A liquid end portion of the outdoor heat exchanger (13) is connected to a first pipe (16).

The outdoor fan (14) is disposed near the outdoor heat exchanger (13). The outdoor fan (14) conveys the outdoor air so that the outdoor air flows through the outdoor heat exchanger (13).

One end of a second pipe (17) is connected to the first pipe (16). The other end of the second pipe (17) is connected to a suction pipe (18) of the compressor (12).

The expansion valve (23) and the internal heat exchanger (21) are connected to the second pipe (17) in this order from the liquid side to the gas side. The expansion valve (23) is an electronic expansion valve having an adjustable opening degree.

The internal heat exchanger (21) is a fin-and-tube heat exchanger. The internal heat exchanger (21) is placed in the freezing refrigeration chamber (3a). The internal heat exchanger (21) exchanges heat between air in the freezing refrigeration chamber (3a) and the refrigerant. As a result, the temperature in the freezing refrigeration chamber (3a) is controlled.

The internal fan (22) is disposed near the internal heat exchanger (21). The internal fan (22) conveys the air in the freezing refrigeration chamber (3a) so that the air in the freezing refrigeration chamber (3a) flows through the internal heat exchanger (21).

### <Operation of Refrigeration Apparatus>

A basic operation (refrigeration operation) of the refrigeration apparatus (10) will be described with reference to FIG. 2.

The refrigerant compressed by the compressor (12) flows through the outdoor heat exchanger (13). In the outdoor heat exchanger (13), the refrigerant dissipates heat to the outdoor air and then condenses. The condensed refrigerant flows through the first pipe (16), and flows into the second pipe (17).

The refrigerant having flowed into the second pipe (17) is decompressed by the expansion valve (23), and then flows through the internal heat exchanger (21). In the internal heat exchanger (21), the refrigerant absorbs heat from the air in the freezing refrigeration chamber (3a) and then evaporates. As a result, the air in the freezing refrigeration chamber (3a) is cooled by the internal heat exchanger (21).

The refrigerant having evaporated in the internal heat exchanger (21) is sucked into the compressor (12) through the suction pipe (18) and then is compressed again.

### <First Embodiment>

A first embodiment of the temperature control system will be described.

The temperature control system controls the temperature of a battery mounting space (50a) in which a battery (B) is mounted.

The battery (B) is a drive source of the refrigeration apparatus (10). As illustrated in FIG. 1, the battery (B) is connected with the first unit (11) and the second unit (20) via a lead wire (L), and supplies power to various components of the refrigeration apparatus (10) via the lead wire (L). As a result, the first unit (11) and the second unit (20) are operated.

The battery (B) is a secondary battery, and is, for example, a nickel-hydrogen battery, a lithium-ion battery, a lead storage battery, or the like. The battery (B) is charged by, for example, a commercial power source and a charger. The AC power of the commercial power source is supplied to the charger. The charger converts the AC power of the commercial power source into DC power. The DC power converted by the charger is supplied to the battery (B), thereby charging the battery (B). The battery (B) may be charged by an engine, a generator, and a power generation inverter. The engine is an internal combustion engine, and rotates wheels (X) of the truck as the moving body (1) by converting the thermal energy generated by combustion of fuel into the rotational energy. Part of the rotational energy converted from the thermal energy of the engine is supplied to the generator via a power split mechanism using planetary gears (not illustrated). The generator generates the AC power by converting the rotational energy from the engine into electrical energy. The three-phase AC power is supplied to the power generation inverter. The power generation inverter converts the three-phase AC power from the generator into the DC power. The DC power converted by the power generation inverter is supplied to the battery (B), thereby charging the battery (B).

The temperature control system includes a housing (50). The housing (50) is a hollow member. The battery mounting space (50a) in which the battery (B) is mounted is formed inside the housing (50). The housing (50) includes a heat insulating material having heat insulating properties, such as foamed polyurethane, glass wool, urethane foam, and a vacuum heat insulating material. The housing (50) is placed in the freezing refrigeration chamber (3a).

The temperature control system includes a circulation passage (60). The circulation passage (60) circulates air between the freezing refrigeration chamber (3a) and the battery mounting space (50a).

The circulation passage (60) includes a first passage (61) and a second passage (62) communicating with the freezing refrigeration chamber (3a) and the battery mounting space (50a). The freezing refrigeration chamber (3a), the first passage (61), the battery mounting space (50a), and the second passage (62) are annularly connected in the order of the freezing refrigeration chamber (3a), the first passage (61), the battery mounting space (50a), the second passage (62), and the freezing refrigeration chamber (3a).

The circulation passage (60) communicates with each of the freezing refrigeration chamber (3a) and the battery mounting space (50a) at least at two locations in order to form a passage for circulating the air between the freezing refrigeration chamber (3a) and the battery mounting space (50a). In the first embodiment, the circulation passage (60) and the battery mounting space (50a) communicate with each other at two locations (61a, 62a), and the circulation passage (60) and the freezing refrigeration chamber (3a) communicate with each other at two locations (61b, 62b).

The temperature control system includes a blower unit (70), a storage unit (71), and a control unit (72).

The blower unit (70) circulates the air between the freezing refrigeration chamber (3a) and the battery mounting space (50a) through the circulation passage (60). The blower unit (70) includes, for example, a fan (70a) and a fan motor (70b) that rotates the fan (70a). The fan (70a) is disposed in, for example, the circulation passage (60). In the first embodiment, the fan (70a) of the blower unit (70) is disposed at the communicating location (62b) between the freezing refrigeration chamber (3a) and the second passage (62). The rotational speed of the fan (70a) is adjusted by the fan motor (70b), whereby the amount of air flowing through the circulation passage (60) is adjusted, and the amount of air sent from the circulation passage (60) to the freezing refrigeration chamber (3a) and the amount of air sent from the freezing refrigeration chamber (3a) to the circulation passage (60) are adjusted. The blower unit (70) may include a blower.

The storage unit (71) includes a memory such as a read only memory (ROM), a random access memory (RAM), a hard disk drive, and an SSD, and stores various computer programs executed by the control unit (72). The control unit (72) includes a processor such as a CPU or an MPU. The control unit (72) controls each component of the temperature control system by executing the computer program stored in the storage unit (71).

The temperature control system includes a temperature adjusting unit. The temperature adjusting unit prevents the temperature of the battery (B) from being excessively cooled. The temperature adjusting unit controls the temperature of air in the battery mounting space (50a) or the temperature of the battery (B) to a temperature that is higher than a predetermined temperature that is higher than or equal to the temperature of air in the freezing refrigeration chamber (3a). In the first embodiment, the temperature adjusting unit includes the blower unit (70) and the control unit (72). In the first embodiment, the temperature adjusting unit adjusts the rotational speed of the fan (70a) by the control unit (72) so that the temperature of air in the battery mounting space (50a) or the temperature of the battery (B) does not become lower than or equal to the predetermined temperature due to the air sent from the freezing refrigeration chamber (3a) to the battery mounting space (50a) by the blower unit (70).

### <First Example of Operation of Temperature Control System>

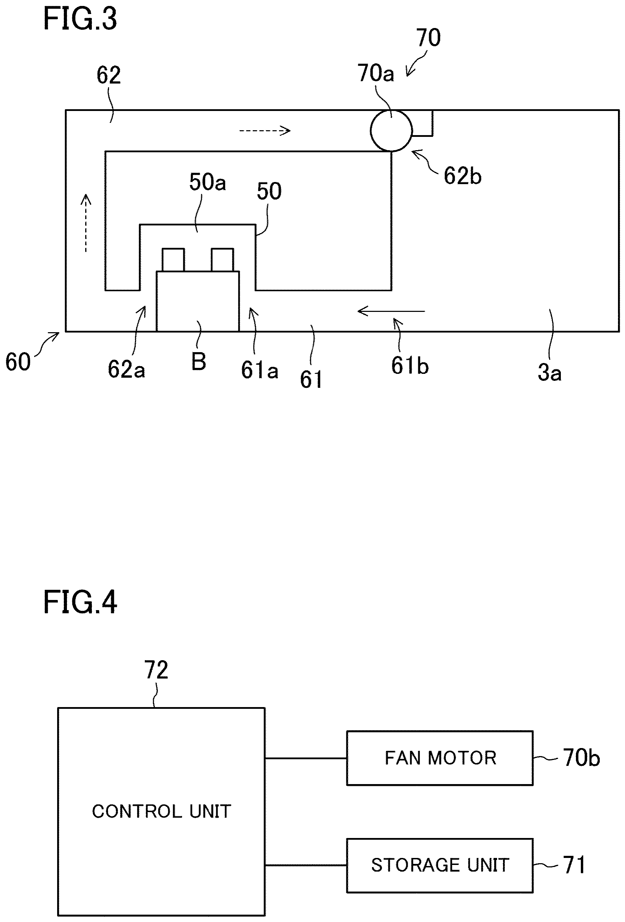

(i) As illustrated in FIGS. 3 and 4, the control unit (72) controls the fan motor (70b) to drive (rotate) the fan (70a), thereby sending the cold air in the freezing refrigeration chamber (3a) to the battery mounting space (50a) through the first passage (61). When the air reaches the battery mounting space (50a), the temperature of the air increases due to heat generation of the battery (B). Accordingly, an increase in the temperature of the battery (B) is reduced.
(ii) The air of which the temperature has increased in the battery mounting space (50a) is sent to the freezing refrigeration chamber (3a) through the second passage (62), and when the air reaches the freezing refrigeration chamber (3a), the air is mixed with the cold air in the freezing refrigeration chamber (3a) and the temperature of the air decreases.

By the fan (70a) continuing to be driven, the air circulates between the freezing refrigeration chamber (3a) and the battery mounting space (50a). Thus, the phenomena described in the above sections (i) and (ii) are repeated. As a result, the cold air in the freezing refrigeration chamber (3a) can be continuously sent to the battery mounting space (50a), and thus the increase in the temperature of the battery (B) can be continuously reduced. The temperatures of the battery mounting space (50a) and the battery (B) are preferably temperatures within a predetermined range suitable for storage of the battery (B) (for example, 0°C or higher and 30°C or lower). The control unit (72) controls the fan (70a) (the amount of air flowing through the circulation passage (60)) so that the temperatures of the battery mounting space (50a) and the battery (B) fall within the predetermined range. In other words, the first embodiment provides the temperature adjusting unit of which the control unit (72) controls the amount of air flowing through the circulation passage (60), whereby the temperature of air in the battery mounting space (50a) or the temperature of the battery (B) becomes higher than or equal to the predetermined temperature that is higher than the temperature of air (for example, 0°C) in the freezing refrigeration chamber (3a).

### <Advantages>

As described above, the circulation passage (60) sends the air in the freezing refrigeration chamber (3a) of which the humidity (the absolute humidity) is low to the freezing refrigeration chamber (3a) after the battery mounting space (50a). Accordingly, the circulation passage (60) circulates the air between the freezing refrigeration chamber (3a) and the battery mounting space (50a). Accordingly, it is possible to stably hold an air pressure in the battery mounting space (50a), and thus it is possible to reduce the outside air flowing into the battery mounting space (50a) due to a negative pressure. As a result, it is possible to reduce dew condensation on the surface of the battery (B) due to the moisture-containing outside air flowing into the battery mounting space (50a). Further, by circulating the air between the freezing refrigeration chamber (3a) and the battery mounting space (50a) through the circulation passage (60), it is possible to prevent the moisture-containing outside air from flowing into the freezing refrigeration chamber (3a), and thus it is possible to hold the state in which the humidity of air in the freezing refrigeration chamber (3a) is lowered.

Moreover, for the freezing refrigeration chamber (3a), since the air circulates between the freezing refrigeration chamber (3a) and the battery mounting space (50a) through the circulation passage (60), it is possible to stably hold the air pressure in the freezing refrigeration chamber (3a), and it is possible to reduce the outside air flowing into the freezing refrigeration chamber (3a). Accordingly, it is possible to reduce an increase in the heat load of the refrigeration apparatus (10) due to the outside air.

Moreover, since the circulation passage (60) can reduce the moisture-containing outside air flowing into the freezing refrigeration chamber (3a), the frequency of defrosting of the internal heat exchanger (21) of the refrigeration apparatus (10) can be reduced, and the temperature fluctuation in the freezing refrigeration chamber (3a) can be reduced.

Moreover, since the temperature adjusting unit is provided, it is possible to control the temperature of air in the battery mounting space (50a) or the temperature of the battery (B) to a temperature that is higher than a predetermined temperature that is higher than or equal to the temperature of air in the freezing refrigeration chamber (3a), and thus it is possible to prevent the temperature of the battery (B) from being too low. As a result, it is possible to reduce deterioration of the battery (B).

### <Second Embodiment>

Regarding the second embodiment of the temperature control system, the differences from the first embodiment will be mainly described.

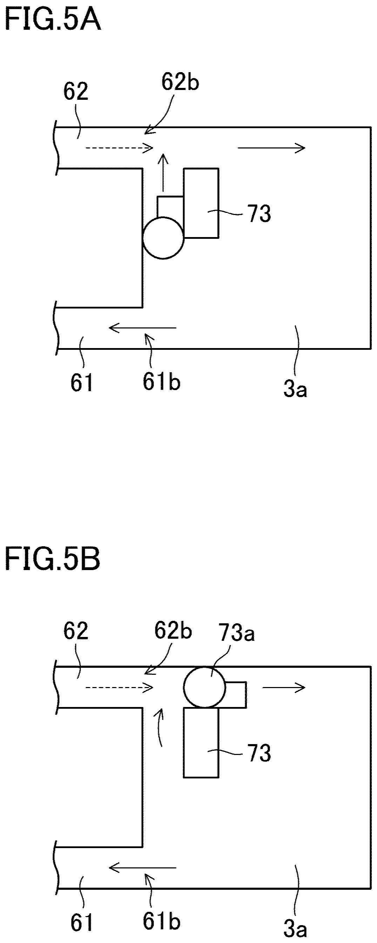

As illustrated in FIG. 5A, the temperature control system of the second embodiment includes a stirring unit (73). The stirring unit (73) stirs the air in the freezing refrigeration chamber (3a). The stirring unit (73) includes, for example, a stirring fan (73a) and a stirring motor that rotates the stirring fan (73a). The stirring fan (73a) is disposed in the freezing refrigeration chamber (3a) and the stirring motor rotates the stirring fan (73a) to generate an airflow in the freezing refrigeration chamber (3a), whereby the stirring unit (73) stirs the air in the freezing refrigeration chamber (3a).

In the second embodiment, the stirring fan (73a) of the stirring unit (73) is disposed in part of the freezing refrigeration chamber (3a) that is close to the communicating location (62b) between the freezing refrigeration chamber (3a) and the second passage (62). The case in which the stirring fan (73a) is disposed in part of the freezing refrigeration chamber (3a) that is close to the communicating location (62b) includes not only the case in which the stirring fan (73a) is disposed upstream of the communicating location (62b) (see FIG. 5A) but also the case in which the stirring fan (73a) is disposed downstream of the communicating location (62b) (see FIG. 5B) in the airflow that the stirring fan (73a) forms to circulate the air in the freezing refrigeration chamber (3a). Accordingly, the stirring unit (73) generates the airflow at part of the freezing refrigeration chamber (3a) in which the communicating location (62b) is placed, and thus it is possible to quickly stir the air sent to the freezing refrigeration chamber (3a) through the second passage (62) and the cold air in the freezing refrigeration chamber (3a). As a result, it is possible to effectively cool the air sent to the freezing refrigeration chamber (3a) through the second passage (62).

The internal fan (22) and the internal motor of the second unit (20) (see FIG. 1) may function as the stirring unit (73). The internal heat exchanger (21) of the second unit (20) may be disposed in part of the freezing refrigeration chamber (3a) that is close to the communicating location (62b) between the freezing refrigeration chamber (3a) and the second passage (62). Accordingly, the air sent to the freezing refrigeration chamber (3a) can be quickly cooled by the internal heat exchanger (21). As a result, it is possible to reduce unevenness of the temperature of air in the freezing refrigeration chamber (3a). The temperature adjusting unit of the second embodiment has, for example, the same configuration as that of the temperature adjusting unit of the first embodiment.

### <Third Embodiment>

Regarding the third embodiment of the temperature control system, the differences from the first embodiment will be mainly described.

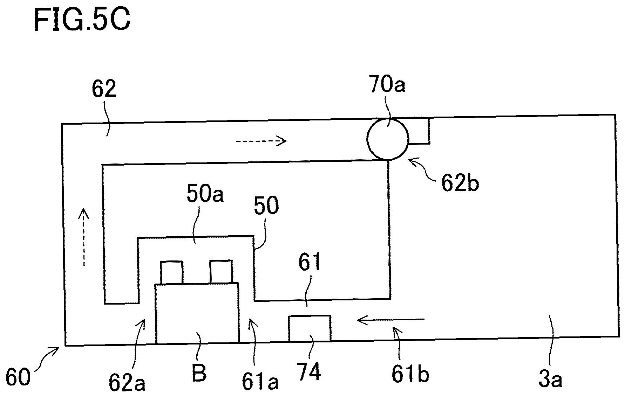

As illustrated in FIG. 5C, the temperature control system of the third embodiment includes a heating unit (74). The heating unit (74) heats the air sent to the battery mounting space (50a). The heating unit (74) is provided in the circulation passage (60) and is disposed upstream of the battery mounting space (50a). In the third embodiment, the heating unit (74) is disposed in the first passage (61). The heating unit (74) includes, for example, a heater. The temperature adjusting unit of the third embodiment includes the blower unit (70), the control unit (72), and the heating unit (74). By the heating unit (74) heating the air sent to the battery mounting space (50a), the temperature adjusting unit of the third embodiment controls the temperature of air in the battery mounting space (50a) or the temperature of the battery (B) to a temperature that is higher than a predetermined temperature that is higher than or equal to the temperature of air in the freezing refrigeration chamber (3a).

The cold air sent from the freezing refrigeration chamber (3a) to the first passage (61) is warmed by the heating unit (74), and then is sent to the battery mounting space (50a). Accordingly, it is possible to prevent the temperature of air from the freezing refrigeration chamber (3a) that is sent to the battery mounting space (50a) from being too low. As a result, it is possible to adjust the temperature of air in the battery mounting space (50a) to a temperature suitable for storing the battery (B). The third embodiment provides the temperature adjusting unit of which the control unit (72) controls the heating unit (74) to heat the air sent by the blower unit (70), thereby controling the temperature of air sent from the freezing refrigeration chamber (3a) to the battery mounting space (50a), whereby the temperature of air in the battery mounting space (50a) or the temperature of the battery (B) becomes higher than or equal to the predetermined temperature that is higher than the temperature of air in the freezing refrigeration chamber (3a).

### <Fourth Embodiment>

Regarding the fourth embodiment of the temperature control system, the differences from the first embodiment will be mainly described.

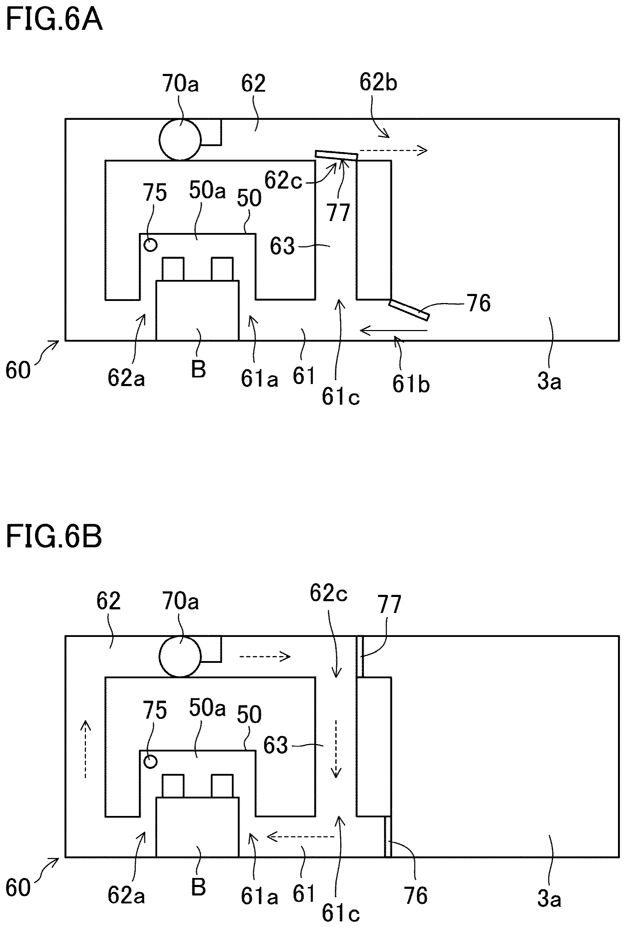

As illustrated in FIGS. 6A and 6B, the temperature control system of the fourth embodiment includes a first temperature sensor (75), a first damper (76), a first damper motor that rotates the first damper (76), a second damper (77), and a second damper motor that rotates the second damper (77). The temperature adjusting unit of the fourth embodiment includes the blower unit (70), the control unit (72), the first temperature sensor (75), the first damper (76), the first damper motor, the second damper (77), and the second damper motor.

The first damper (76) is provided at the communicating location (61b) between the freezing refrigeration chamber (3a) and the first passage (61). The first damper motor rotates the first damper (76), thereby switching the state of the first damper (76) to either an open state or a closed state. When the first damper (76) is in the open state, the communicating location (61b) is opened (see FIG. 6A). As a result, the freezing refrigeration chamber (3a) and the first passage (61) communicate with each other. When the first damper (76) is in the closed state, the communicating location (61b) is closed by the first damper (76) (see FIG. 6B). As a result, the communication between the freezing refrigeration chamber (3a) and the first passage (61) is disconnected by the first damper (76).

The second damper (77) is provided at a communicating location (62c) between a third passage (63) and the second passage (62). The temperature adjusting unit of the fourth embodiment includes the third passage (63). The second damper motor rotates the second damper (77), thereby switching the state of the second damper (77) to either an open state or a closed state. When the second damper (77) is in the open state, the second passage (62) is opened (see FIG. 6A). As a result, the freezing refrigeration chamber (3a) and the second passage (62) communicate with each other. When the second damper (77) is in the closed state, the third passage (63) and the second passage (62) communicate with each other, and part of the second passage (62) between the communicating location (62c) and the communicating location (62b) is closed by the second damper (77), whereby the communication between the freezing refrigeration chamber (3a) and the second passage (62) is disconnected (see FIG. 6B).

By the opening degrees of the first damper (76) and the second damper (77) being adjusted, the amount of air flowing through the circulation passage (60) is adjusted, and also the amount of air sent from the circulation passage (60) to the freezing refrigeration chamber (3a) is adjusted. The first damper (76) and the second damper (77) are second examples of a first adjusting unit and a second adjusting unit.

The temperature control system of the fourth embodiment includes the first temperature sensor (75). The first temperature sensor (75) detects the temperature (the air temperature) of the battery mounting space (50a).

The circulation passage (60) of the fourth embodiment includes the third passage (63). The third passage (63) communicates with the first passage (61) and the second passage (62). The communicating location (61c) between the third passage (63) and the first passage (61) is located closer to the battery mounting space (50a) than the communicating location (61b). The communicating location (62c) between the third passage (63) and the second passage (62) is located closer to the battery mounting space (50a) than the communicating location (62b).

In the fourth embodiment, the fan (70a) is disposed in the second passage (62), and is disposed closer to the battery mounting space (50a) than the communicating location (62c).

In the fourth embodiment, by the control unit (72) controlling the air volume of the blower unit (70) and the operations of the first damper (76) and the second damper (77) based on the detection value of the first temperature sensor (75) (the temperature in the battery mounting space (50a)), the temperature adjusting unit adjusts the amount of air sent from the freezing refrigeration chamber (3a) to the battery mounting space (50a) so that the temperature of air in the battery mounting space (50a) becomes higher than or equal to the predetermined temperature that is higher than the temperature of air in the freezing refrigeration chamber (3a). The predetermined temperature only needs to be a temperature that is higher than the temperature of air in the freezing refrigeration chamber (3a). The predetermined temperature is, for example, a value in the range of 0°C or higher and 30°C or lower. The predetermined temperature may be a value obtained by adding a predetermined value to the air temperature in the freezing refrigeration chamber (3a) that is detected by the temperature sensor provided in the freezing refrigeration chamber (3a), or may be a predetermined constant value (for example, 0°C or the like). In the embodiments other than the fourth embodiment (the first, second, and third embodiments), the temperature adjusting unit may be provided with the first temperature sensor (75), whereby, based on the detection value of the first temperature sensor (75) (the temperature in the battery mounting space (50a)), the control unit (72) can control the various components of the temperature adjusting unit so that the temperature of air in the battery mounting space (50a) becomes higher than or equal to the predetermined temperature that is higher than the temperature of air in the freezing refrigeration chamber (3a).

By the control unit (72) controlling the air volume of the blower unit (70) and the operations of the first damper (76) and the second damper (77), the temperature adjusting unit adjusts the amount of air sent from the freezing refrigeration chamber (3a) to the battery mounting space (50a) so that the temperature of the battery (B) becomes higher than or equal to the predetermined temperature that is higher than the temperature of air in the freezing refrigeration chamber (3a). The temperature of the battery (B) may be detected by a temperature sensor provided on the battery (B), or may be calculated by the control unit (72) based on the correlation information (a table or the like) prepared in advance that indicates the correlation between the temperature of the battery mounting space (50a) and the temperature of the battery (B) and based on the detection value of the first temperature sensor (75). In the embodiments other than the fourth embodiment (the first, second, and third embodiments), the temperature adjusting unit may be provided with a temperature sensor that detects the temperature of the battery (B) (or the control unit (72) may be configured to calculate the temperature of the battery (B) based on the correlation information), whereby the control unit (72) can control the various components of the temperature adjusting unit so that the temperature of the battery (B) detected by the temperature sensor (or the temperature of battery (B) calculated by the control unit (72)) becomes higher than or equal to the predetermined temperature that is higher than the temperature of air in the freezing refrigeration chamber (3a).

### <Second Example of Operation of Temperature Control System>

A second example of the operation of the temperature control system will be described.

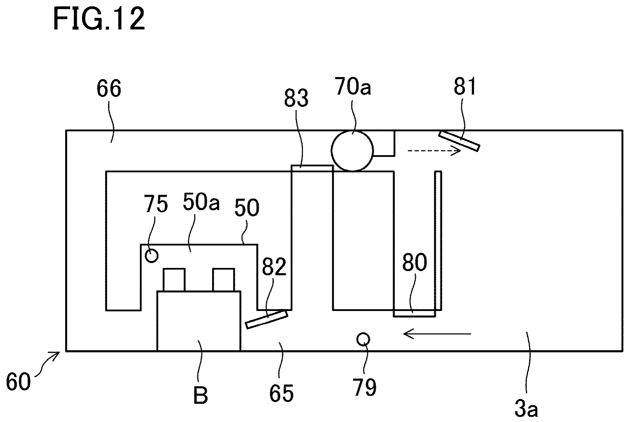

In each of the second to fifth examples of the operation of the temperature control system described below (FIGS. 6A to 6B, FIGS. 8A to 8B, FIGS. 10A to 10C, and FIG. 12), during the operation of the second to fifth examples, the blower unit (70) (the fan (70a)) is operated, whereby the flow of air is generated in the circulation passage (60) (see solid arrows and dotted arrows in each figure).

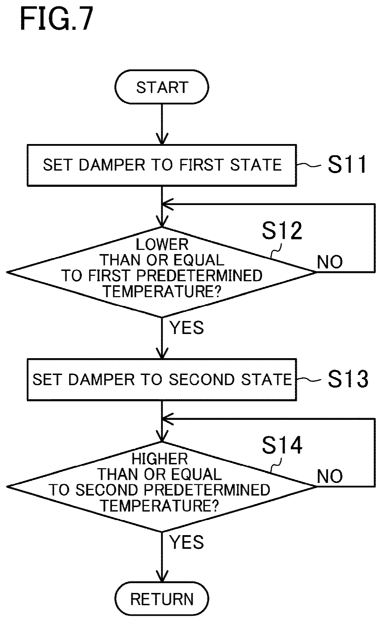

As illustrated in FIGS. 6A and 7, in step S11, the control unit (72) sets the damper to a first state. Setting the damper to the first state means setting the first damper (76) to the open state and setting the second damper (77) to the open state. Accordingly, the cold air in the freezing refrigeration chamber (3a) circulates between the freezing refrigeration chamber (3a) and the battery mounting space (50a) through the circulation passage (60). As a result, the temperature of the battery mounting space (50a) is decreased.

In step S12, the control unit (72) determines whether the detection value of the first temperature sensor (75) (the temperature of the battery mounting space (50a)) is lower than or equal to a first predetermined temperature. If it is determined that the temperature is lower than or equal to the first predetermined temperature (Yes in step S12), the process proceeds to step S13. If it is determined that the temperature is not lower than or equal to the first predetermined temperature (No in step S12), the process of step S12 is repeated.

As illustrated in FIGS. 6B and 7, in step S13, the control unit (72) sets the damper to a second state. Setting the damper to the second state means setting the first damper (76) to the closed state and setting the second damper (77) to the closed state. Accordingly, the communication between the freezing refrigeration chamber (3a) and the circulation passage (60) is disconnected, whereby the air circulates in the order of the first passage (61), the second passage (62), the third passage (63), and the first passage (61) without being cooled in the freezing refrigeration chamber (3a). As a result, the temperature of the battery mounting space (50a) increases over time due to heat generation of the battery (B).

In step S14, the control unit (72) determines whether the detection value of the first temperature sensor (75) (the temperature of the battery mounting space (50a)) is higher than or equal to a second predetermined temperature. The second predetermined temperature is higher than the first predetermined temperature. If it is determined that the temperature is higher than or equal to the second predetermined temperature (Yes in step S14), the process proceeds to step S11. If it is determined that the temperature is not higher than or equal to the second predetermined temperature (No in step S14), the process of step S14 is repeated.

With the above configuration, it is possible to hold the state in which the temperature of the battery mounting space (50a) is higher than the first predetermined temperature and lower than the second predetermined temperature. As a result, the temperature of the battery mounting space (50a) can be held at a favorable temperature which is not too low and not too high for the battery (B).

### (Variation of Fourth Embodiment)

In step S12, if the control unit (72) determines that a first predetermined time has elapsed since the damper was set to the first state (Yes in step S12), the process may proceed to step S13, and if the control unit (72) determines that the first predetermined time has not elapsed (No in step S12), the process of step S12 may be repeated. In this case, the control unit (72) functions as a timer. The first predetermined time is a time during which the detection value of the first temperature sensor (75) (the temperature of the battery mounting space (50a)) is lower than or equal to the first predetermined temperature due to the cold air from the freezing refrigeration chamber (3a). The first predetermined time may be a constant value. The first predetermined time may be a value according to the temperature of the freezing refrigeration chamber (3a), the DC power supplied from the battery (B), or the like. In this case, for example, a table in which the first predetermined time is associated with the temperature of the freezing refrigeration chamber (3a) or the DC power supplied from the battery (B) is created in advance. Then, in step S12, the control unit (72) acquires the information indicating the temperature of the freezing refrigeration chamber (3a) or the DC power supplied from the battery (B), and employs the first predetermined time that corresponds to that information in the table.

In step S14, if the control unit (72) determines that a second predetermined time has elapsed since the damper was set to the second state (Yes in step S14), the process may proceed to step S11, and if the control unit (72) determines that the second predetermined time has not elapsed (No in step S14), the process of step S14 may be repeated. The second predetermined time is a time during which the detection value of the first temperature sensor (75) is higher than or equal to the second predetermined temperature due to heat generation of the battery (B).

### <Fifth Embodiment>

Regarding the fifth embodiment of the temperature control system, the differences from the fourth embodiment will be mainly described.

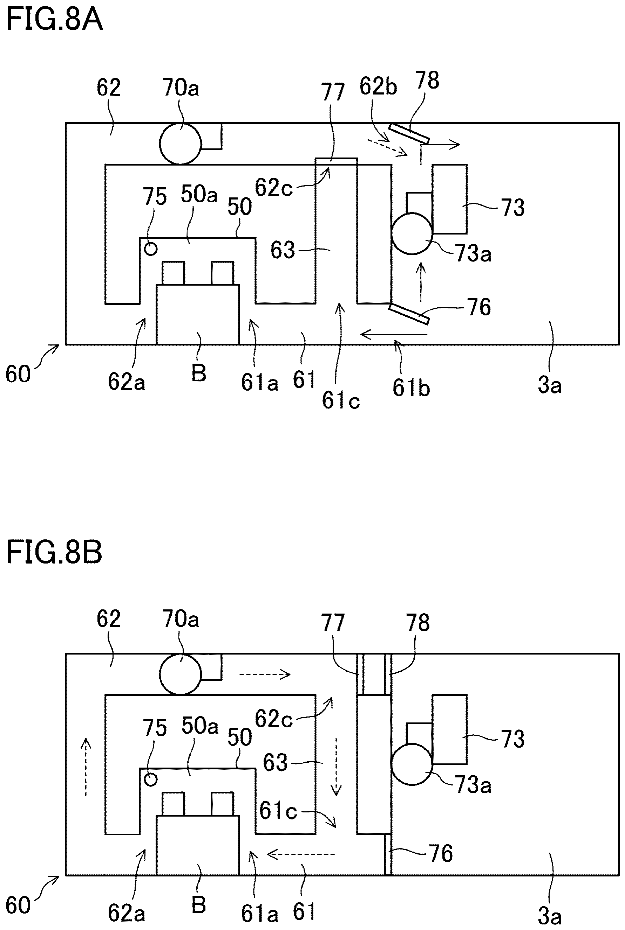

As illustrated in FIGS. 8A and 8B, the temperature control system of the fifth embodiment includes a third damper (78) and a third damper motor that rotates the third damper (78). In addition to the components of the temperature adjusting unit of the fourth embodiment, the temperature adjusting unit of the fifth embodiment further includes the third damper (78) and the third damper motor.

The third damper (78) is provided at the communicating location (62b) between the freezing refrigeration chamber (3a) and the second passage (62). The third damper (78) is located downstream of the second damper (77). The third damper motor rotates the third damper (78), thereby switching the state of the third damper (78) to either an open state or a closed state. When the third damper (78) is in the open state, the communicating location (62b) is opened (see FIG. 8A). When the third damper (78) is in the closed state, the communicating location (62b) is closed by the third damper (78) (see FIG. 8B).

In the fifth embodiment, the stirring fan (73a) of the stirring unit (73) is provided in part of the freezing refrigeration chamber (3a) that is close to the communicating location (62b).

In addition to the configuration of the temperature adjusting unit of the fourth embodiment, the fifth embodiment provides the temperature adjusting unit of which the control unit (72) further controls the third damper (78), thereby adjusting the amount of air sent from the freezing refrigeration chamber (3a) to the battery mounting space (50a), whereby the temperature of air in the battery mounting space (50a) or the temperature of the battery (B) becomes higher than or equal to the predetermined temperature that is higher than the temperature of air in the freezing refrigeration chamber (3a).

### <Third Example of Operation of Temperature Control System>

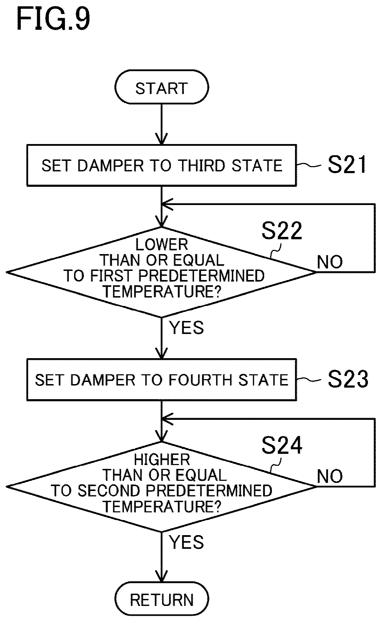

As illustrated in FIGS. 8A and 9, in step S21, the control unit (72) sets the damper to a third state. Setting the damper to the third state means setting the first damper (76) to the open state, setting the third damper (78) to the open state, and setting the second damper (77) to the open state. When the damper is in the third state, the freezing refrigeration chamber (3a) and the circulation passage (60) communicate with each other, whereby the cold air in the freezing refrigeration chamber (3a) circulates between the freezing refrigeration chamber (3a) and the battery mounting space (50a) through the circulation passage (60).

At this time, the air of which the temperature has increased due to heat generation of the battery (B) in the battery mounting space (50a) is sent to the freezing refrigeration chamber (3a) through the second passage (62). When the air of which the temperature has increased flows into the freezing refrigeration chamber (3a), the air is immediately exposed to the cold air in the freezing refrigeration chamber (3a) from the stirring unit (73), whereby being cooled by being mixed with the cold air. Accordingly, it is possible to reduce unevenness of the temperature of air in the freezing refrigeration chamber (3a).

In step S22, the control unit (72) determines whether the detection value of the first temperature sensor (75) (the temperature of the battery mounting space (50a)) is lower than or equal to the first predetermined temperature. If it is determined that the temperature is lower than or equal to the first predetermined temperature (Yes in step S22), the process proceeds to step S23. If it is determined that the temperature is not lower than or equal to the first predetermined temperature (No in step S22), the process of step S22 is repeated.

As illustrated in FIGS. 8B and 9, in step S23, the control unit (72) sets the damper to a fourth state. Setting the damper to the fourth state means setting the first damper (76) to the closed state, setting the third damper (78) to the closed state, and setting the second damper (77) to the closed state. Accordingly, the communication between the freezing refrigeration chamber (3a) and the circulation passage (60) is disconnected, whereby the air circulates in the order of the first passage (61), the second passage (62), the third passage (63), and the first passage (61) without being cooled in the freezing refrigeration chamber (3a). As a result, the temperature of the battery mounting space (50a) increases over time due to heat generation of the battery (B).

In step S24, the control unit (72) determines whether the detection value of the first temperature sensor (75) (the temperature of the battery mounting space (50a)) is higher than or equal to a second predetermined temperature. If it is determined that the temperature is higher than or equal to the second predetermined temperature (Yes in step S24), the process proceeds to step S21. If it is determined that the temperature is not higher than or equal to the second predetermined temperature (No in step S24), the process of step S24 is repeated.

With the above configuration, it is possible to hold the state in which the temperature of the battery mounting space (50a) is higher than the first predetermined temperature and lower than the second predetermined temperature. As a result, the temperature of the battery mounting space (50a) can be held at a favorable temperature which is not too low and not too high for the battery (B).

In the third example of the operation of the temperature control system, unlike the second example (see FIG. 6A), when the damper is in the third state (see FIG. 8A), the communication between the third passage (63) and the second passage (62) is disconnected by the second damper (77). Thus, in the fifth embodiment, when the air of which the temperature has increased by heat generation of the battery (B) (the air with the increased temperature) is sent to the freezing refrigeration chamber (3a) through the second passage (62), all of the air with the increased temperature is sent to the freezing refrigeration chamber (3a) without part of the air with the increased temperature branching and flowing into the third passage (63), and thus a greater amount of air with the increased temperature is sent to the freezing refrigeration chamber (3a) compared to the fourth embodiment (see FIG. 6A). In the fifth embodiment, the great amount of air with the increased temperature sent to the freezing refrigeration chamber (3a) (indicated by the dotted arrows in FIG. 8A) is exposed to the cold air by the stirring unit (73) immediately after being sent to the freezing refrigeration chamber (3a) (indicated by the solid arrows in FIG. 8A), and thus the air with the increased temperature can be effectively cooled. As a result, the process of step S21 in FIG. 8A (the process of cooling the air in the battery mounting space (50a)) can be effectively performed.

### <Variation of Fifth Embodiment>

In step S22, if the control unit (72) determines that a first predetermined time has elapsed since the damper was set to the third state (Yes in step S22), the process may proceed to step S23, and if the control unit (72) determines that the first predetermined time has not elapsed (No in step S22), the process of step S22 may be repeated.

In step S24, if the control unit (72) determines that a second predetermined time has elapsed since the damper was set to the second state (Yes in step S24), the process may proceed to step S21, and if the control unit (72) determines that the second predetermined time has not elapsed (No in step S24), the process of step S24 may be repeated.

### <Sixth Embodiment>

Regarding the sixth embodiment of the temperature control system, the differences from the first embodiment will be mainly described.

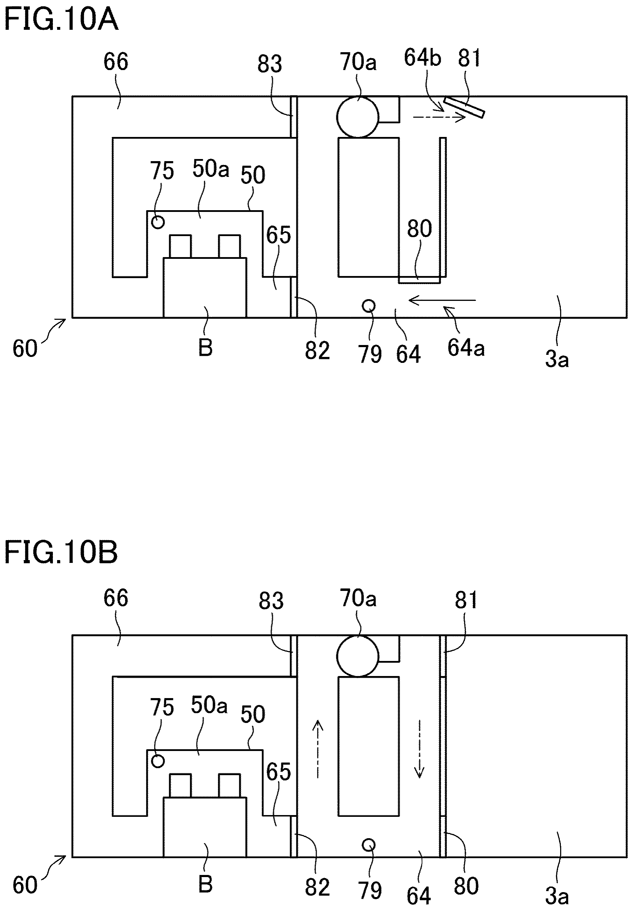

As illustrated in FIGS. 10A to 10C, the circulation passage (60) of the sixth embodiment includes a fourth passage (64), a fifth passage (65), and a sixth passage (66). The fourth passage (64) is formed in an annular shape. The fourth passage (64) communicates with the freezing refrigeration chamber (3a) at least at two locations. In the sixth embodiment, the fourth passage (64) and the freezing refrigeration chamber (3a) communicate with each other at two locations (64a, 64b). Each of the fifth passage (65) and the sixth passage (66) communicates with the fourth passage (64) and the battery mounting space (50a). The fourth passage (64), the fifth passage (65), the battery mounting space (50a), and the sixth passage (66) are annularly connected in the order of the fourth passage (64), the fifth passage (65), the battery mounting space (50a), the sixth passage (66), and the fourth passage (64).

The temperature control system of the sixth embodiment includes the blower unit (70), the first temperature sensor (75), a fourth damper (80), a fourth damper motor that rotates the fourth damper (80), a fifth damper (81), a fifth damper motor that rotates the fifth damper (81), a sixth damper (82), a sixth damper motor that rotates the sixth damper (82), a seventh damper (83), and a seventh damper motor that rotates the seventh damper (83). The fourth damper (80) to the seventh damper (83) are examples of switching units. The temperature adjusting unit of the sixth embodiment includes the blower unit (70), the control unit (72), the first temperature sensor (75), a second temperature sensor (79), the fourth damper (80), the fourth damper motor, the fifth damper (81), the fifth damper motor, the sixth damper (82), the sixth damper motor, the seventh damper (83), and the seventh damper motor. In the sixth embodiment, by the control unit (72) controlling the air volume of the blower unit (70) and the operations of the fourth damper (80), the fifth damper (81), the sixth damper (82), and the seventh damper (83), the temperature adjusting unit adjusts the amount of air sent from the freezing refrigeration chamber (3a) to the battery mounting space (50a) so that the temperature of air in the battery mounting space (50a) or the temprature of the battery (B) becomes higher than or equal to the predetermined temperature that is higher than the temperature of air in the freezing refrigeration chamber (3a).

In the sixth embodiment, the fan (70a) of the blower unit (70) is disposed in the fourth passage (64). The first temperature sensor (75) detects the temperature (the air temperature) of the battery mounting space (50a). The second temperature sensor (79) detects the temperature (the air temperature) of the fourth passage (64).

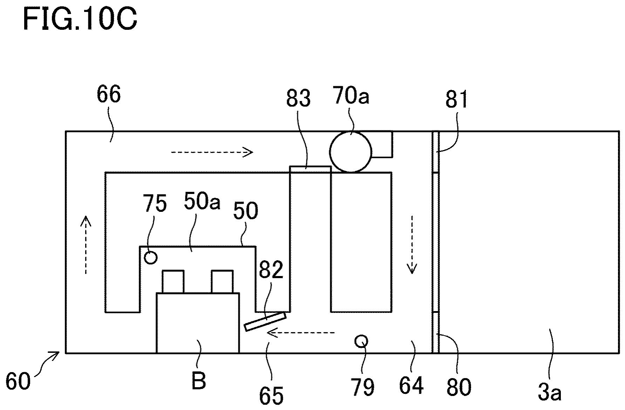

The fourth damper motor rotates the fourth damper (80), thereby switching the state of the fourth damper (80) to either an open state or a closed state. When the fourth damper (80) is in the open state, the freezing refrigeration chamber (3a) and the fourth passage (64) communicate with each other (see FIG. 10A). When the fourth damper (80) is in the closed state, the communication between the freezing refrigeration chamber (3a) and the fourth passage (64) is disconnected by the fourth damper (80) (see FIGS. 10B and 10C).

The fifth damper motor rotates the fifth damper (81), thereby switching the state of the fifth damper (81) to either an open state or a closed state. When the fifth damper (81) is in the open state, the freezing refrigeration chamber (3a) and the fourth passage (64) communicate with each other (see FIG. 10A). When the fifth damper (81) is in the closed state, the communication between the freezing refrigeration chamber (3a) and the fourth passage (64) is disconnected by the fifth damper (81) (see FIGS. 10B and 10C).

The sixth damper motor rotates the sixth damper (82), thereby switching the state of the sixth damper (82) to either an open state or a closed state. When the sixth damper (82) is in the open state, the fifth passage (65) and the fourth passage (64) communicate with each other (see FIG. 10C). When the sixth damper (82) is in the closed state, the communication between the fifth passage (65) and the fourth passage (64) is disconnected by the sixth damper (82) (see FIGS. 10A and 10B).

The seventh damper motor rotates the seventh damper (83), thereby switching the state of the seventh damper (83) to either an open state or a closed state. When the seventh damper (83) is in the open state, the sixth passage (66) and the fourth passage (64) communicate with each other (see FIG. 10C). When the seventh damper (83) is in the closed state, the communication between the sixth passage (66) and the fourth passage (64) is disconnected by the seventh damper (83) (see FIGS. 10A and 10B).

### <Fourth Example of Operation of Temperature Control System>

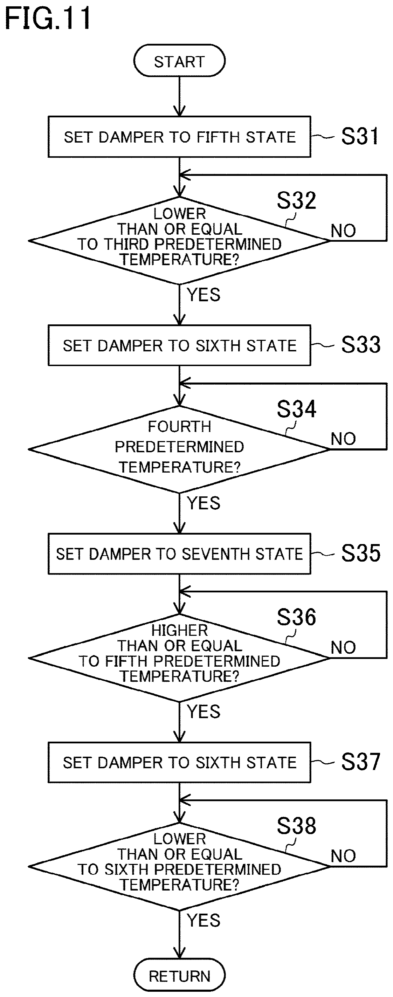

As illustrated in FIGS. 10A and 11, in step S31, the control unit (72) sets the damper to a fifth state. Setting the damper to the fifth state means setting the fourth damper (80) to the open state, setting the fifth damper (81) to the open state, setting the sixth damper (82) to the closed state, and setting the seventh damper (83) to the closed state. When the damper is in the fifth state, the cold air in the freezing refrigeration chamber (3a) is sent to the fourth passage (64).

In step S32, the control unit (72) determines whether the detection value of the second temperature sensor (79) (the temperature of the fourth passage (64)) is lower than or equal to a third predetermined temperature. That is, the control unit (72) determines whether the temperature of air in the fourth passage (64) has decreased due to the cold air in the freezing refrigeration chamber (3a) supplied to the fourth passage (64). If it is determined that the temperature is lower than or equal to the third predetermined temperature (Yes in step S32), the process proceeds to step S33. If it is determined that the temperature is not lower than or equal to the third predetermined temperature (No in step S32), the process of step S32 is repeated.

As illustrated in FIGS. 10B and 11, in step S33, the control unit (72) sets the damper to a sixth state. Setting the damper to the sixth state means setting the fourth damper (80) to the closed state, setting the fifth damper (81) to the closed state, setting the sixth damper (82) to the closed state, and setting the seventh damper (83) to the closed state. When the damper is in the sixth state, the fourth passage (64) is closed, whereby the air circulates through the fourth passage (64). At this time, heat of the passage (the fifth passage (65) and the sixth passage (66)) close to the battery mounting space (50a) is transferred, whereby the temperature of air in the fourth passage (64) increases.

In step S34, the control unit (72) determines whether the detection value of the second temperature sensor (79) has become a fourth predetermined temperature. That is, the control unit (72) determines whether the temperature of the excessively-cooled air sent from the freezing refrigeration chamber (3a) to the fourth passage (64) has become the fourth predetermined temperature suitable for cooling the battery (B). The fourth predetermined temperature is higher than the third predetermined temperature. The fourth predetermined temperature may be a constant temperature or may be a temperature that ranges between the upper limit and the lower limit. If it is determined that the temperature has become the fourth predetermined temperature (Yes in step S34), the process proceeds to step S35. If it is determined that the temperature is not the fourth predetermined temperature (No in step S34), the process of step S34 is repeated.

As illustrated in FIGS. 10C and 11, in step S35, the control unit (72) sets the damper to a seventh state. Setting the damper to the seventh state means setting the fourth damper (80) to the closed state, setting the fifth damper (81) to the closed state, setting the sixth damper (82) to the open state, and setting the seventh damper (83) to the open state. When the damper is in the seventh state, the air in the fourth passage (64) is sent to the battery mounting space (50a) through the fifth passage (65), whereby the temperature of air in the battery mounting space (50a) decreases. As a result, it is possible to effectively reduce an increase in the temperature of the battery (B).

In step S36, the control unit (72) determines whether the detection value of the second temperature sensor (79) is higher than or equal to a fifth predetermined temperature. That is, the control unit (72) determines whether the temperature of air flowing through the fourth passage (64), the fifth passage (65), the battery mounting space (50a), and the sixth passage (66) has increased to some extent due to heat generation of the battery (B). The fifth predetermined temperature is higher than the fourth predetermined temperature. If it is determined that the temperature is higher than or equal to the fifth predetermined temperature (Yes in step S36), the process proceeds to step S37. If it is determined that the temperature is not higher than or equal to the fifth predetermined temperature (No in step S36), the process of step S36 is repeated.

As illustrated in FIGS. 10B and 11, in step S37, the control unit (72) sets the damper to the sixth state. When the damper is in the sixth state, the fourth passage (64) is closed, whereby the air circulates through the fourth passage (64). At this time, the heat of air in the fourth passage (64) is transferred to the low-temperature freezing refrigeration chamber (3a), whereby the temperature of air in the fourth passage (64) decreases.

In step S38, the control unit (72) determines whether the detection value of the second temperature sensor (79) is lower than or equal to a sixth predetermined temperature. That is, the control unit (72) determines whether the temperature of air of which the temperature has increased due to heat generation of the battery (B) has decreased to some extent. The sixth predetermined temperature is lower than the fifth predetermined temperature. If it is determined that the temperature is lower than or equal to the sixth predetermined temperature (Yes in step S38), the process proceeds to step S31. If it is determined that the temperature is not higher than or equal to the sixth predetermined temperature (No in step S38), the process of step S38 is repeated.

As illustrated in FIGS. 10A and 11, in step S31, the damper is set to the fifth state, whereby the air in the fourth passage (64) is sent to the freezing refrigeration chamber (3a). At this time, decreasing the temperature of air in the fourth passage (64) to some extent in step S37 allows the air of which the temperature has decreased to some extent in step S31 to be sent to the freezing refrigeration chamber (3a), and thus it is possible to reduce a rapid increase in the temperature of the freezing refrigeration chamber (3a). As a result, it is possible to stably hold the low temperature state of the freezing refrigeration chamber (3a). Further, since it is possible to reduce a rapid increase in the temperature of the freezing refrigeration chamber (3a), it is possible to an increase in the heat load of the refrigeration apparatus (10).

### <Variation of Sixth Embodiment>

In step S32, if the control unit (72) determines that a third predetermined time has elapsed since the damper was set to the fifth state (Yes in step S32), the process may proceed to step S33, and if the control unit (72) determines that the third predetermined time has not elapsed (No in step S32), the process of step S32 may be repeated. The third predetermined time is a time during which the detection value of the second temperature sensor (79) (the temperature of the fourth passage (64)) is lower than or equal to the third predetermined temperature due to the cold air from the freezing refrigeration chamber (3a).

In step S34, if the control unit (72) determines that a fourth predetermined time has elapsed since the damper was set to the sixth state (Yes in step S34), the process may proceed to step S35, and if the control unit (72) determines that the fourth predetermined time has not elapsed (No in step S34), the process of step S34 may be repeated. The fourth predetermined time is a time during which the detection value of the second temperature sensor (79) is the fourth predetermined temperature due to heat generation of the battery (B) being transmitted to the fourth passage (64).

In step S36, if the control unit (72) determines that a fifth predetermined time has elapsed since the damper was set to the seventh state (Yes in step S36), the process may proceed to step S37, and if the control unit (72) determines that the fourth predetermined time has not elapsed (No in step S36), the process of step S36 may be repeated. The fifth predetermined time is a time during which the detection value of the second temperature sensor (79) is higher than or equal to the fifth predetermined temperature due to heat generation of the battery (B).

In step S38, if the control unit (72) determines that a sixth predetermined time has elapsed since the damper was set to the sixth state (Yes in step S38), the process may proceed to step S31, and if the control unit (72) determines that the sixth predetermined time has not elapsed (No in step S38), the process of step S38 may be repeated. The sixth predetermined time is a time during which the detection value of the second temperature sensor (79) is higher than or equal to the sixth predetermined temperature due to heat of the air in the fourth passage (64) being transmitted to the low-temperature freezing refrigeration chamber (3a).

### <Seventh Embodiment>

Regarding the seventh embodiment of the temperature control system, the differences from the sixth embodiment will be mainly described.

### <Fifth Example of Operation of Temperature Control System>

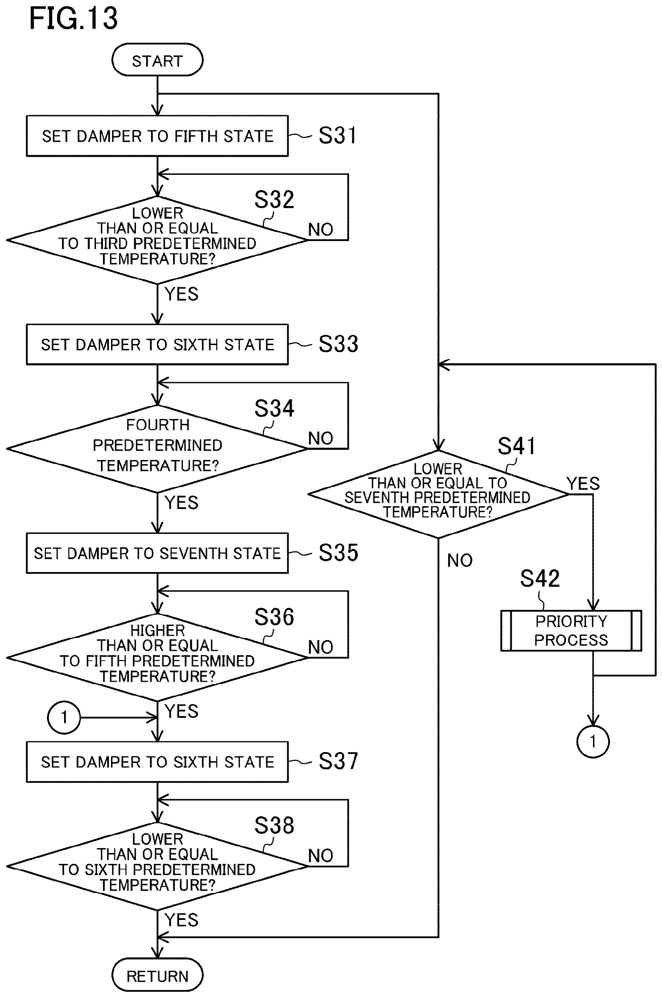

As illustrated in FIG. 13, in the fifth example, the process of step S41 is performed in parallel with the process of steps S31 to S38 in the fourth example (see FIG. 11).

In step S41, the control unit (72) determines whether the detection value of the first temperature sensor (75) (the temperature of the battery mounting space (50a)) is higher than or equal to a seventh predetermined temperature. The seventh predetermined temperature is higher than the fifth predetermined temperature. The seventh predetermined temperature is, for example, a temperature that is high enough to be undesirable for storage of the battery (B), or a temperature that is close to that undesirable temperature. If it is determined that the temperature is higher than or equal to the seventh predetermined temperature (Yes in step S41), the process proceeds to step S42. If it is determined that the temperature is not higher than or equal to the seventh predetermined temperature (No in step S41), the process of step S41 is repeated.

As illustrated in FIG. 13, in step S42, the priority process (step S421 and step S422) is performed. The priority process is process performed in priority to the process of steps S31 to S38 and step S41. While the priority process is being performed, the process of steps S31 to S38 and step S41 is stopped.

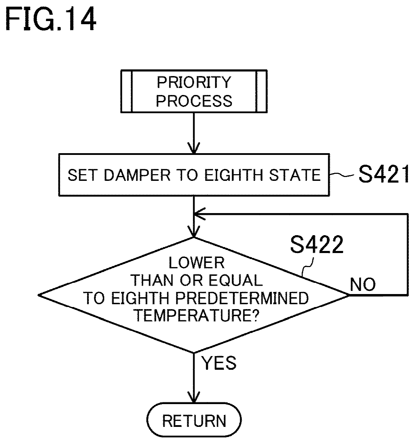

As illustrated in FIGS. 13 and 14, in step S421, the control unit (72) sets the damper to an eighth state. Setting the damper to the eighth state means setting the fourth damper (80) to the open state, setting the fifth damper (81) to the open state, setting the sixth damper (82) to the open state, and setting the seventh damper (83) to the open state. When the damper is in the eighth state, the cold air in the freezing refrigeration chamber (3a) is sent to the battery mounting space (50a) through the fourth passage (64) and the fifth passage (65), whereby the temperature of air in the battery mounting space (50a) decreases. By the damper being set to the eighth state, the cold air in the freezing refrigeration chamber (3a) is quickly sent to the battery mounting space (50a) without being stopped in the fourth passage (64), and thus it is possible to quickly decrease the temperature of air in the battery mounting space (50a).

In step S422, the control unit (72) determines whether the detection value of the first temperature sensor (75) (the temperature of the battery mounting space (50a)) is lower than or equal to an eighth predetermined temperature. The eighth predetermined temperature is lower than the seventh predetermined temperature and higher than or equal to the fourth predetermined temperature. The eighth predetermined temperature is a temperature in the same level as the fourth predetermined temperature, for example. If it is determined that the temperature is lower than or equal to the eighth predetermined temperature (Yes in step S422), the priority process ends, and the process proceeds to steps S37 and S41. If it is determined that the temperature is not lower than or equal to the eighth predetermined temperature (No in step S422), the process of step S422 is repeated.

### <Variation of Seventh Embodiment>

In step S422, if the control unit (72) determines that a seventh predetermined time has elapsed since the damper was set to the eighth state (Yes in step S422), the process may proceed to step S37 and step S41 upon the end of the priority process, and if the control unit (72) determines that the seventh predetermined time has not elapsed (No in step S422), the process of step S422 may be repeated. The seventh predetermined time is a time during which the detection value of the first temperature sensor (75) (the temperature of the battery mounting space (50a)) is lower than or equal to the eighth predetermined temperature due to the cold air from the freezing refrigeration chamber (3a).

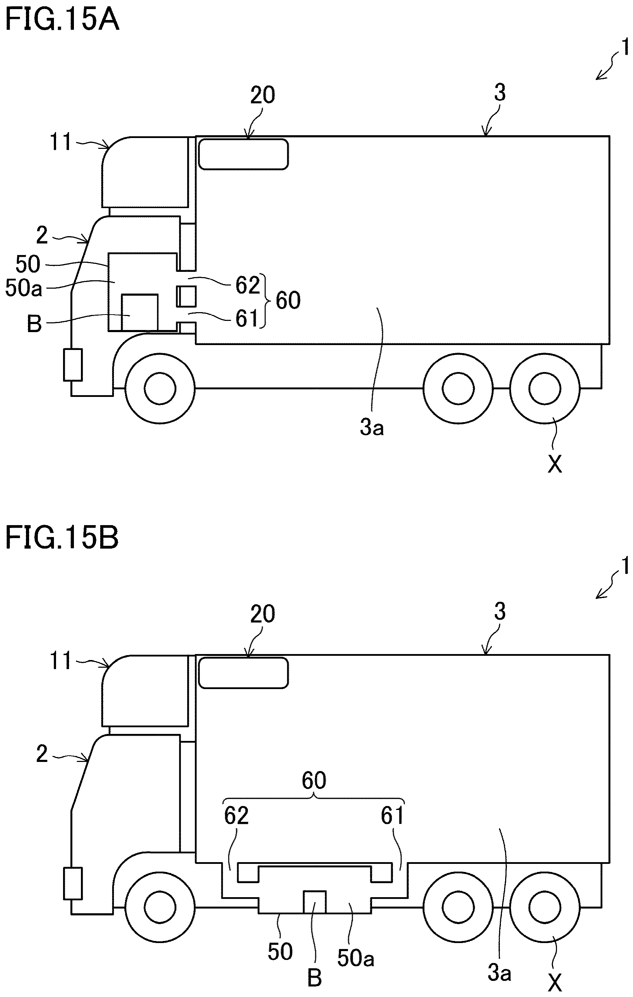

While the embodiments and variations thereof have been described above, it will be understood that various changes in form and details may be made without departing from the spirit and scope of the claims ((A) to (G) below). The elements according to the embodiments, the variations thereof, and the other embodiments may be combined and replaced with each other.
(A) In the temperature control system of each of the fourth to fifth embodiments, the heating unit (74) (see FIG. 5C) may be disposed in the first passage (61). In the temperature control system of each of the sixth to seventh embodiments, the heating unit (74) may be disposed in the fifth passage (65).
(B) In the temperature control system of each of the fourth to seventh embodiments, the internal heat exchanger (21) of the second unit (20) may be disposed in part of the freezing refrigeration chamber (3a) that is close to the communicating location (62b, 64b) between the freezing refrigeration chamber (3a) and the circulation passage (60). The internal heat exchanger (21) may be disposed in the circulation passage (60) (in the second passage (62)).
(C) In the first to seventh embodiments, the temperature control system may include the refrigeration apparatus (10), and the control unit (72) of the temperature control system may control the operation of the refrigeration apparatus (10) based on the volume of air (the rotational speed of the fan (70a) of the blower unit (70)) or the temperature of air (the detection value of the first temperature sensor (75)) sent from the circulation passage (60) to the freezing refrigeration chamber (3a). For example, the control unit (72) increases the number of rotations of the compressor (12) as the volume of air sent from the circulation passage (60) to the freezing refrigeration chamber (3a) increases (as the rotational speed of the fan (70a) increases). For example, the control unit (72) increases the number of rotations of the compressor (12) as the temperature of air sent from the circulation passage (60) to the freezing refrigeration chamber (3a) increases (as the temperature detected by the first temperature sensor (75) increases).
(D) The moving body (1) of the first to seventh embodiments is not limited to a vehicle such as a truck. The moving body (1) may be any object which can travel on land, at sea, or in the air, and may be, for example, a ship, an airplane, or the like.
(E) In the first to seventh embodiments, the housing (50) (the battery mounting space (50a)) is provided in the freezing refrigeration chamber (3a) (see FIG. 1). However, the present invention is not limited thereto. As illustrated in FIG. 15A, the housing (50) may be provided in the cabin (2) (in the moving body (1)). As illustrated in FIG. 15A, the housing (50) may be provided in a lower portion of the moving body (1).
(F) In the first to seventh embodiments, the refrigeration apparatus (10) is described as an example of an apparatus which is mounted on the moving body (1) and which is supplied with power from the battery (B). However, the present invention is not limited thereto. The apparatus which is mounted on the moving body (1) and which is supplied with the power from the battery (B) may be any apparatus which operates with the power from the battery (B) in a state of being mounted on the moving body (1). For example, the apparatus may be an air conditioner, a home appliance, or the like mounted on a camping vehicle. The battery (B) may be a battery for driving the moving body (1).
(G) In the fourth to seventh embodiments, the first temperature sensor (75) detects the temperature (the air temperature) of the battery mounting space (50a). However, the present invention is not limited thereto. The first temperature sensor (75) may detect the temperature of the battery (B). In this case, in steps S12 and S14 of FIG. 7, steps S22 and S22 of FIG. 9, step S41 of FIG. 13, and step S422 of FIG. 14, the temperature of the battery mounting space (50a) is read as the temperature of the battery (B), and the control unit (72) compares the temperature of the battery mounting space (50a) with various predetermined temperatures (the first predetermined temperature, the second predetermined temperature, the seventh predetermined temperature, the eighth predetermined temperature, and the like). The temperature of the battery (B) may not be a temperature that is detected by the first temperature sensor (75), and may be a temperature that is calculated (estimated) by the control unit (72) based on the power supplied from the battery (B).

The expressions of "first," "second," and "third" described above are used to distinguish the terms to which these expressions are given, and do not limit the number and order of the terms.

### INDUSTRIAL APPLICABILITY

As described above, the present disclosure is useful for a temperature control system.

### DESCRIPTION OF REFERENCE CHARACTERS

- 1: Moving Body
- 3a: Freezing Refrigeration Chamber
- 50a: Battery Mounting Space
- 60: Circulation Passage
- B: Battery

## Claims

1. A temperature control system comprising:
a mechanism configured to circulate air between a freezing refrigeration chamber (3a) in a moving body (1) and a battery mounting space (50a) in which a battery (B) is mounted,
wherein
the mechanism includes
a circulation passage (60) configured to send air in the freezing refrigeration chamber (3a) to the freezing refrigeration chamber (3a) after the battery mounting space (50a), and
a temperature adjusting unit configured to adjust a temperature of air in the battery mounting space (50a) or a temperature of the battery (B) to a temperature higher than or equal to a predetermined temperature that is higher than a temperature of air in the freezing refrigeration chamber (3a).

2. The temperature control system of claim 1, wherein
the circulation passage (60) communicates with each of the freezing refrigeration chamber (3a) and the battery mounting space (50a) at least at two locations (61b, 62b, 61a, 62a).

3. The temperature control system of claim 1 or 2, wherein
the circulation passage (60) includes a first passage (61) and a second passage (62) communicating with the freezing refrigeration chamber (3a) and the battery mounting space (50a), and
the freezing refrigeration chamber (3a), the first passage (61), the battery mounting space (50a), and the second passage (62) are annularly connected in an order of the freezing refrigeration chamber (3a), the first passage (61), the battery mounting space (50a), the second passage (62), and the freezing refrigeration chamber (3a).

4. The temperature control system of any one of claims 1 to 3, wherein
the mechanism includes a first adjusting unit configured to adjust a volume of air flowing through the circulation passage (60).

5. The temperature control system of claim 4, wherein
the first adjusting unit includes a blower unit (70) or a damper (76, 77, 78, 80, 81, 82, 83).

6. The temperature control system of any one of claims 1 to 5, wherein
the circulation passage (60) is provided with a heating unit (74) disposed upstream of the battery mounting space (50a) and configured to heat air.

7. The temperature control system of any one of claims 1 to 6, wherein
the mechanism includes a second adjusting unit configured to adjust a volume of air sent from the circulation passage (60) to the freezing refrigeration chamber (3a).

8. The temperature control system of claim 7, wherein
the second adjusting unit includes a blower unit (70) or a damper (77, 81).

9. The temperature control system of any one of claims 1 to 8, further comprising:
a stirring unit (73) provided in the freezing refrigeration chamber (3a) and configured to stir air in the freezing refrigeration chamber (3a),
wherein
the stirring unit (73) is disposed to stir air sent from the battery mounting space (50a) to the freezing refrigeration chamber (3a) in the freezing refrigeration chamber (3a).

10. The temperature control system of any one of claims 1 to 9, further comprising:
a refrigeration apparatus (10) capable of performing a refrigeration operation by circulating a refrigerant,
wherein
the refrigeration apparatus (10) includes a heat exchanger (21) configured to exchange heat between the refrigerant and the air in the freezing refrigeration chamber (3a), and
the heat exchanger (21) is disposed in part of the freezing refrigeration chamber (3a) that is close to a communicating location (62b, 64b) between the freezing refrigeration chamber (3a) and the circulation passage (60).

11. The temperature control system of claim 3, wherein
the circulation passage (60) includes a third passage (63) communicating with the first passage (61) and the second passage (62).

12. The temperature control system of any one of claims 1 to 10, wherein
the circulation passage (60) includes
a fourth passage (64) formed in an annular shape and communicating with the freezing refrigeration chamber (3a) at least at two locations (64a, 64b), and
a fifth passage (65) and a sixth passage (66) communicating with the fourth passage (64) and the battery mounting space (50a), and
the fourth passage (64), the fifth passage (65), the battery mounting space (50a), and the sixth passage (66) are annularly connected in an order of the fourth passage (64), the fifth passage (65), the battery mounting space (50a), the sixth passage (66), and the fourth passage (64).

13. The temperature control system of claim 12, wherein
the mechanism includes
a switching unit (80, 81, 82, 83) configured to switch between the fourth passage (64) being disconnected and not disconnected from each of the freezing refrigeration chamber (3a), the fifth passage (65), and the sixth passage (66), and
a blower unit (70) provided in the fourth passage (64) and configured to blow air.

14. The temperature control system of any one of claims 1 to 13, wherein
the battery mounting space (50a) is provided in the freezing refrigeration chamber (3a), a lower portion of the moving body (1), or an inside of the moving body (1).

15. The temperature control system of any one of claims 1 to 14, further comprising:
a refrigeration apparatus (10) configured to control a temperature in the freezing refrigeration chamber (3a); and
a control unit (72) configured to control operation of the refrigeration apparatus (10) based on a volume or temperature of air sent from the circulation passage (60) to the freezing refrigeration chamber (3a).
